# EUROPEAN PATENT SPECIFICATION

(11) **EP 3 255 869 B1**
(45) Date of publication and mention of the grant of the patent: **07.07.2021**
(21) Application number: 17382294.1
(22) Date of filing: 23.05.2017
(51) Int. Cl.: H04M 1/725, G06Q 10/10, H04M 1/60

(54) **TEXT MESSAGE GENERATION METHOD FOR AN ELECTRONIC DEVICE IN A VEHICLE**
TEXTNACHRICHTENERSTELLUNGSVERFAHREN FÜR EINE ELEKTRONISCHE VORRICHTUNG IN EINEM FAHRZEUG
PROCÉDÉ DE GÉNÉRATION DE MESSAGES TEXTES POUR UN DISPOSITIF ÉLECTRONIQUE DANS UN VÉHICULE

(30) Priority: 09.06.2016 ES 201630791
(43) Date of publication of application: 13.12.2017
(73) Proprietor: Seat, S.A., 08760 Martorell - Barcelona (ES)
(72) Inventor: MORENO PAREJO, Alejandro, 08760 Barcelona (ES)
(74) Representative: Elzaburu S.L.P.

(56) References cited:
- EP-A1- 2 753 052
- US-A1- 2006 156 209

## Description

### PURPOSE OF THE INVENTION

The present patent application relates to a text message generation method for an electronic device in a vehicle according to claim 1, incorporating notable innovations and advantages.

### BACKGROUND TO THE INVENTION

Various different generation methods for a text message for an electronic device in a vehicle are currently known.

There are different options available to eliminate the risk of distraction when sending text messages, Whatsapp messages, etc., such as dictation. These systems are very slow, requiring several steps and confirmation. These systems do not recognize the words dictated perfectly, and do not work if music or conversations can be heard simultaneously. Furthermore, the software required is somewhat complicated.

On the other hand, a message transfer system including display device and mobile device and message transfer method thereof is known in the prior art, specifically document EP2753052.

Said display device includes a memory that stores a plurality of text templates, which are filled out with information compiled from the mobile device or from the control unit of the vehicle, a detector that captures different pieces of information on the state of the vehicle, a screen that displays a message transfer interface and a controller that automatically generates a message from the combination of at least one of the text templates and at least one of the different pieces of status information. The user selects the type of message to be transferred on the transfer interface and a communicator transfers the message to an external device.

The message generation described in this patent is based on notifying location and/or traffic conditions and/or estimated time of arrival and/or weather information and/or information on the content being played on the screen.

Consequently, said patent discloses a device comprising a screen, a memory that stores information, and a controller configured to generate automatic messages when the user decides to send a message in response to an incoming message. When a user receives a message, said message and the information related to the contact who sent the message are shown on the screen, and the user can choose between two options: contacting said sender by making a call or sending a message. If the user chooses to respond with a message, a message generation screen is opened showing a series of icons that are associated with templates containing predetermined wordings. Said wordings are associated with information that must have been previously compiled by the control unit, either from the vehicle or from the mobile device, to enable the message to be completed.

Nonetheless, the only option available is to reply to an incoming message with another message, which does not address the need to send a message to a different addressee who may not necessarily have sent the incoming message in question, and it is not possible to generate a message that is not related to compiled information, but that is a communication between the user and another person.

A method for predicting the use of an application in a mobile terminal that includes an input device that selects and executes any of two or more applications; a GPS reception unit; a behaviour pattern extraction unit that creates a usage prediction rule of the application executed on the input device, in association with a usage location detected by the GPS reception unit; and an information display control unit that specifies, based on the usage prediction rule, is also known from the prior art, and specifically document US7574661. The application corresponds to the current location detected by the GPS reception unit, and the application specified is displayed as a prediction result on a screen.

Consequently, the patent discloses the use of logs to predict which message to send as a function of location and the accumulated log. Said message is created on the basis of a text template, which may have been entered manually by the user or be made up of repeated terms from messages in the user's log. The connection of a mobile terminal with a vehicle is also disclosed.

An automatic messages generation method based on a determined state of a mobile terminal is also known in the prior art, specifically document US9191483. Specifically, the method may include storing a plurality of text messages in said mobile terminal, determining a state of the mobile terminal, and selecting and displaying one of the plurality of text messages stored as a function of the determined state of the mobile terminal.

Nonetheless, the objective of the documents cited is not related to preventing driver distractions, but relates to a more efficient use of the messaging service of a telephone. To do so, the related method uses a memory that stores a series of text message templates, the information in which is combined with information contained from the state of the mobile. State of the mobile means information processed using logic related to the events stored in the calendar and the GPS location of the device.

It is also known from the state of the art, by the patent document US2006156209, a mobile terminal that appropriately predicts an application that a user is likely to use, which includes: an input device that selects and executes any of two or more applications; a GPS reception unit; a behaviour pattern extraction unit that creates a usage prediction rule of the application executed on the input device, in association with a usage location detected by the GPS reception unit; and an information display control unit that specifies, based on the usage prediction rule, an application corresponding to the current location detected by the GPS reception unit, and causes a display to display the specified application as a prediction result. As a result, there is a need for a text message generation method for an electronic device in a vehicle that streamlines the configuration and sending of text messages to a user, anticipating the needs of the driver using a reliable prediction technique, obviating the need for the driver to read or type when driving.

### DESCRIPTION OF THE INVENTION

The invention is set forth claim 1. Any other aspect of the invention is set forth and limited by the dependent claims.

The present invention involves the generation of a text message to be sent, based on the prediction of aspects of said text message, such as to encourage safe driving of a motor vehicle. The invention helps to minimize the driver's attention on the screen or graphical display device inside the vehicle by predicting aspects of the message and using representative icons and symbols, which enable the user-friendly and intuitive operation of the text message generation method according to the present invention.

Nowadays, in the case of the messaging application *Whatsapp,* tapping an icon or symbol (such as a dog's face) results in the addressee of said message receiving said icon. However, the idea proposed is for the user to receive a text message associated to the icon (for example: "Remember to feed the dog") instead of the graphical icon itself. This display facilitates the sending of short messages on-the-go: Tapping these icons is much more simple than writing text, reducing the related risk, which involves a loss of the driver's attention.

More specifically, there are three types of message that the user can send:
- Entirely predefined text messages, such as "I am coming",
- Personalized predefined messages, to which the user adds a parameter, such as "I will be there in 5 minutes", where the user only has to select the number "5", and
- Messages including data collected from the vehicle, such as the time left to destination. This value is included in the message without the user having to enter said value (for example: "I will arrive in 23 minutes").

The parameters that the system takes into consideration when parameterizing a possible scenario for the driver are (by way of non-limiting example): weather, time of day, day of the week, traffic conditions, starting point, destination and other variables, such as calendar events and driver state.

Furthermore, it should be noted that the invention provides additional functionality over the close prior art document EP2753052, specifically that the text message generation method for an electronic device in a vehicle firstly proposes people or addressees to whom the message can be sent. Secondly, the icons need not be directly related to the information on the vehicle or the environment thereof. The system may also contain other types of static information, providing the user with a much wider range of options to choose from, and giving the user practically the same degree of freedom as if they were able to write freely. Thirdly, the message to be sent using proposed icons and symbols also varies as a function of the addressee chosen, improving the accuracy and reliability of the predictions, since same are not only based on predicting addressees and messages, but the system is also smart enough to associate the most probable messages with each addressee.

More specifically, the text message generation method for an electronic device in a vehicle includes the following steps:
(i) collecting data on at least one parameter of the vehicle and/or the context thereof,
(ii) determining at least one probable addressee for the at least one text message from a plurality of contacts stored in an address book of the electronic device, as a function of information accumulated in a database of the electronic device and of the collected data on at least one parameter of the vehicle and/or the context thereof,
(iii) determining at least one probable text template for the at least one text message from a plurality of text templates stored in a memory of the electronic device, as a function of the information accumulated in the database of the electronic device, of the collected data on at least one parameter of the vehicle and/or the context thereof, and of the probable addressee determined,
(iv) presenting in a graphical display device a plurality of icons representing the at least one probable addressee determined, and
(v) presenting in a graphical display device the at least one probable text template determined.

Thus, when the user decides the send a text message and opens the application for that purpose, the system is able to automatically predict the probable addressee and/or addressees of the message, as well as which types of message to send. In the context of this patent, "probable" means learning from a log and analysing the message sending habits of each user, and associating same with environments and/or contexts at the time the messages are sent. Consequently, the system has a memory storing the messages that the user has previously selected and sent, as well as the addressees of same, for a given scenario. For example, if today is Tuesday, the time is 5:30 PM, it is raining and the situation is "leaving work", the system will search through the log to determine the message and the addressee most frequently repeated under these conditions.

In other words, once the system has collected and process the initial information, the system is able to compare with other text messages sent in the past to determine the addressees of said text messages in similar scenarios, as well as the information that was sent. This firstly enables the system to propose addressees and to display same in decreasing order of probability, to make the process comfortable, intuitive and substantially free of distractions. Depending on the addressee selected, the system proposes a text template associated with the text messages sent to said addressee in similar past situations. This enables the system to provide the user with an accurate and reliable prediction that obviates the need to use other methods, which may result in dangerous distractions when driving.

The objective is at all times to prevent the user's attention from being diverted away from driving, suggesting and proposing as accurately as possible the people and content of the text messages that are most likely to be sent. This minimizes the risk of accidents.

Additional advantages of the invention are that the system works much quicker than systems based on voice recognition, since the time required to perform said process is not required. Furthermore, the client need not turn off the music and the other people in the passenger compartment need not be silent since there can be no recognition errors. This invention is therefore compatible with other activities that may be carried out inside the vehicle, and the use thereof does not interrupt or interfere with said other activities.

In a preferred embodiment of the invention, the step of presenting in the graphical display device the at least one probable text template includes a representation of the at least one probable text template using at least one symbol.

It should be noted that a possible alternative would be that the user receives a series of proposals in text form, selecting the one they wish to send. Nonetheless, working with symbols and icons is quicker and more intuitive, and reduces distractions.

Consequently, the first step is determining the addressee, after which the content is sought and the most frequently used symbols are proposed for this scenario and this person. Consequently, the user only has to tap one of the symbols or icons proposed by the system, thereby facilitating on-the-go operation. Such operation involving tapping symbols or icons can also be applied to selecting options.

Each symbol is associated with a text template to enable the user to identify the text message to be sent quickly and intuitively, i.e. without distractions. Additional information may be added to said text template, or not.

Thus, each probable addressee is displayed in a similar manner on the graphical display device using an icon.

Advantageously, the step of presenting in the graphical display device the plurality of icons includes arranging the plurality of icons in descending order of probability depending on the information accumulated and the collected data.

In other words, the present invention is able to predict the addressee and the text message links to the selected addressee, as well as displaying the graphical representation of the most probable symbols once an addressee has been selected on the basis of the selection of the representative icon selected by the user.

Preferably but without limitation, the addressees of the text message are displayed at the top of the screen in order of historical probability. Said addressees are represented by icons. It is not a problem if the desired addressee of the text message does not appear on this first display, since it is possible to advance through the address book, for example by tapping an arrow for this purpose, to display all of the addressee is that the user has stored as contacts in their address book. Consequently, the probabilities go down, since said addressees are not historically selected under similar circumstances. In this case, the advantage is that it is not necessary to leave the system to find an addressee to whom the user has never sent a text message, since said addressee remains in the list, but removed from the main or most frequent addressees.

In a particular example, the user taps the first icon representing the addressee that the system proposes as the most probable. Once selected on an initially blank screen of the graphical display device, a series of proposed symbols is displayed, said symbols containing text messages that fit the scenario in question and the addressee selected. If the user selects the second icon representing the second most probable addressee (or third or any other), as determined by the system, the symbols change to adapt to the addressee in question.

In accordance with the foregoing, the first few times that the user uses the system, the predictive capacity of the system will not be so developed, and as such the more the system is used, the more reliable the predictions will become. It should be noted that the information displayed on the screen of the graphical display device is the information proposed by the system on the basis of information collected in the past and stored in logs.

It should also be noted that the icons and symbols are recommended as a function of different parameters of the vehicle. For example, if the user has activated the windscreen wipers, the symbol representing the text message "It is raining" (for example a grey cloud with raindrops) will appear amongst the first symbols, since the system will understand that it may be one of the text messages that the user wants to send at that time. Other data such as the time of day or the current position of the vehicle (close to home, close to work, etc.) are other factors to be taken into account when proposing icons or symbols to the user. The icons or symbols proposed appear amongst the first icons and symbols. The user may nonetheless select any other symbol from an extensive library.

Consequently, the system and method according to the present invention is able to prioritize icons and symbols. Nonetheless, the system is also able to detect special situations, such as very dense traffic or a traffic jam. There is a consequent need to communicate in the event of anomalous situations. Consequently, although historically in this scenario different text messages have been sent, and therefore the symbols that are shown are related to other matters, the system will nonetheless propose a symbol regarding the traffic conditions, since the action would be extraordinary and not routine, and would be appropriate to be transmitted to the user of the vehicle at that time.

According to another aspect of the invention, the step of presenting in a graphical display device the at least one symbol includes arranging the at least one symbol in descending order of probability depending on the information accumulated, the collected data and the probable addressee determined. This ensures that the user will most probably find the symbol relating to the text message that needs to be sent on the initial screen.

It should be noted that the icons represented on the graphical display device relate to potential addressees. If the user taps another icon relating to another addressee, the symbols change to the symbols normally associated with this new contact.

Advantageously, the method according to the invention includes an additional step in which a user selects one of a plurality of icons representing the at least one probable addressee determined.

It is therefore possible for the at least one probable addressee to be the final addressee of the text message. The information available enables the electronic device to predict and/or calculate and/or estimate which of the contacts in the address book is the most probable addressee of the text message. However, regardless of the accuracy thereof, the prediction will not always match the intentions of the user. For this reason, the screen displays the contacts represented by icons arranged in decreasing order of probability, so that the user can select another icon that is not in the "most probable" position, thereby choosing for the final addressee not to be the most probable addressee, as determined by the system.

According to another aspect of the invention, the selection by a user of one of the plurality of icons determines the order of the at least one symbol shown, such that the more frequently same is selected during use, the system will understand that the selection of same is more probable, and same will appear in a more prominent position on the screen of the graphical display device for said scenario.

Furthermore, the method according to the invention includes an additional step in which a user selects one of the at least one symbol representing the at least one probable text template determined. This enables the user to choose the text to be sent by simply selecting a representative symbol.

Thus, the pre-selection of the most probable addressee by selecting the icon representing same (which is positioned in the first location as the most probable, the appropriate location according to the decreasing order described above) means that the symbols that appear showing the different types of text message text template are arranged in a first manner. If the user, when selecting the addressee, does not choose the most probable addressee but the second most probable addressee (i.e. the icon occupying the second position in the decreasing order of probable addressees), said symbols or icons are automatically rearranged in a second manner which may be the same as the first manner or otherwise. This means that the symbol library contains symbols that do not appear on the graphical display device, when same occupy positions substantially removed from the first position on account of the lower probability of same being sent. Consequently, if for any reason that cannot be predicted by the system the user wishes to select one of these symbols representing a text template that is not considered to be probable, the user will have to move said symbols on the screen until the desired symbol is found.

More preferably, the information accumulated includes a plurality of text templates previously sent and/or a plurality of addressees of text messages previously sent, and/or data previously collected. Said collected information is accumulated such as to be ordered and/or classified so that each context and/or environment defined is associated with probable text templates that are likely to be sent a addressees.

More specifically, the collected data include at least one datum on the weather conditions and/or time of day and/or day of the week and/or traffic conditions and/or starting point of the route and/or destination of the route, said information preferably being the information commonly sent by text message.

In a preferred embodiment of the invention, the text message includes the at least one probable text template and/or at least some collected data on at least one parameter of the vehicle and/or on the context thereof.

It should be noted that the text messages include a text template, and that said text templates may have gaps or blank spaces designed to be filled out with information. This information is obtained from the vehicle or from the environment and/or context thereof, using means designed for this purpose. Text templates may include no additional information, such as *"I am leaving home",* which is static information, or include dynamic information, such as *"I am on Aragón Street",* in which case the content is modified as a function of the at least one parameter of the vehicle and/or of the context thereof and the probable addressee determined.

In the case of dynamic text messages, symbols are not associated with static wordings that are ready to be sent, but there are symbols whose content depends directly on the parameters required to determine the scenario (weather, GPS navigation, traffic conditions, etc.). As such, a given symbol will have a text template with gaps or blank spaces to be filled out with the real collected information from the data collected on the at least one parameter of the vehicle and/or the context thereof.

Text messages can also be dynamic, for example when selecting a symbol such as "I am near to ...". The system fills out the text template related to this symbol with information obtained from the GPS navigator at that moment, i.e. with data collected on the at least one parameter of the vehicle and/or the context thereof.

According to another aspect of the invention, the method includes an additional step in which a user edits at least one of the text templates stored in the memory, in order to personalize same to meet the need to send a text message with a variant in relation to the pre-existing text messages.

It should be noted that the text templates are predefined and stored in a database, but that the user can modify said text templates by editing same if desired, such that the symbol representing the text template in question, when selected, is linked to the new text template edited by the user.

Advantageously, the text templates associated with the symbols are predefined and stored in the memory of the electronic device, and the user can additionally edit and/or personalize said text templates such as to change the text template associated with the symbol if the user desires. As such, a symbol showing a house (for example) associated with a text template reading "I am leaving home" can be changed by the user to read "I have just left home right now!", making the system appear more human.

It should be noted that the user can edit both the content of the text template of the text messages and the priority of certain icons representing contacts or symbols from the library representing the text templates.

The user can also predefine their own comments. For example, a symbol of a boy could mean "Remember to feed the child" in a first case for a first person and "Please collect the child from school" in a second case for a second person. This allows the user to personalize the comments to fit different situations and requirements in their life.

Advantageously, the icon of the plurality of icons representing the most probable addressee is displayed on the graphical display device in a position closest to a driving position, making it easier for the driver/user to tap the icon representing the most probable addressee.

Consequently, the remaining icons representing the remaining contacts are arranged, in a preferred embodiment, "horizontally" using the decreasing sequence described above, as a function of the probability of being the final addressee. As a result, the icon occupying the second position in the sequence will be the second most probable addressee, and the third icon will be the third most probable addressee, and so on. Each contact in the address book of the electronic device is represented by a given icon, such that the graphical display device shows the icons associated with the contacts most likely to be the final addressees of the text message.

In an alternative embodiment, an icon from the plurality of icons representing contacts in the address book represents a plurality of contacts simultaneously. When an icon representing a group of contacts, such as an icon representing "family", is selected by the user, the addressee of the text message is not a single addressee but a plurality of contacts that the user may have configured in advance. As a result, a plurality of addressees associated with one another by means of an icon can be selected with a single gesture.

Additionally, the symbol representing the most probable message text template is displayed on the graphical display device in a position closest to the driving position and/or in a position closest to the position of the icon, which makes it easier for the driver/user to tap the symbol representing the most probable text template.

More specifically, the plurality of icons is shown in a first row on the graphical display device, and the at least one symbol is shown on at least one second row beneath the first row on the graphical display device. As a result, the screen is distributed in an orderly fashion and by functionality, the first row containing icons representing potential addressees and the second and subsequent rows containing symbols relating to the different text messages that can be sent. This reduces the time required by the user to become familiar with the functionality of the device and of the application including the present method. Additionally, this display ensures that the driver/user always has the most probable addressee and text template easily available.

It should be noted that, in a preferred embodiment, the plurality of icons is displayed by moving the row of icons towards the driving position, although there may be other alternatives such as pushing an ellipsis icon to directly access the address book.

In an alternative solution, another way of accessing the other contacts stored in the address book is by swiping a finger over the section of the graphical display device showing the most probable icons, causing said icons to move, which results in the most probable icons disappearing off one side of the graphical display device and the successively less probable icons appearing on the other side of the graphical display device, in accordance with the related order of probability. In other words, the user can *scroll* through the imaginary line formed by the succession of icons.

Furthermore, the plurality of symbols is displayed by moving the symbols towards the driving position and/or upwards, although there may be other alternatives such as tapping an ellipsis icon to directly access the address book and/or another screen with additional symbols.

According to the present invention, the manner in which the icons or symbols appear can also vary such that the most frequently used icons or symbols always appear at the top and the least frequently used icons or symbols appear lower down (in the case of a screen with vertical movement), compared to an embodiment in which the icons or symbols that are most frequently used always appear on the side of the screen of the graphical display device closest to the driver, and the least frequently used icons or symbols appear on the side of the screen furthest away from the driver. In both of these cases, the icons or symbols appear in decreasing order of probability from top to bottom or from one side to the other respectively. Top and bottom mean the upper edge and the lower edge of the graphical display device respectively, and one side and the other side mean the side of the graphical display device closest to the driving position and the side of the graphical display device furthest away from the driving position.

The attached drawings show, by way of non-limiting example, a text message generation method for an electronic device in a vehicle, according to the invention. Other features and advantages of said text message generation method for an electronic device in a vehicle to which the present invention relates, are set out in the description of a preferred, but non-exclusive, embodiment, which is illustrated by way of a nonlimiting example in the attached drawings, in which:

### SHORT DESCRIPTION OF THE FIGURES

Figure 1 is a schematic view of a possible scenario in which the driver is in their vehicle, showing example parameters taken into account by the system, according to the present invention.
Figure 2 is a schematic view of a possible table showing example parameters and information handled by the system, according to the present invention.
Figure 3 is a front view of a mobile device showing an example of the icons and symbols handled by the system, according to the present invention.
Figure 4 is a front view of a mobile device showing an example of the icons, symbols and text templates of text messages handled by the system, according to the present invention.
Figure 5 is a front view of a mobile device showing an example of the icons and text templates of text messages handled by the system, according to the present invention.
Figure 6A is a front view of a mobile device showing an example of icons in a first row, symbols in a second row with additional information and text messages handled by the system, according to the present invention.
Figure 6B is a front view of a mobile device showing an example of icons in a first row, symbols in a second row with additional information and text messages depending on the icon selected, according to the present invention.
Figure 6C is a front view of a mobile device showing an example of icons in a first row, icons in a second row with additional information and text messages depending on the icon selected, according to the present invention.
Figure 7 is a schematic overview of the different elements that make up the text message generation method for an electronic device in a vehicle, and the implementation thereof in an application running in a device, according to the present invention.

### DESCRIPTION OF A PREFERRED EMBODIMENT

In consideration of the numbering adopted, the aforementioned figures show an example preferred embodiment of the invention that includes the parts and elements mentioned and described in detail below.

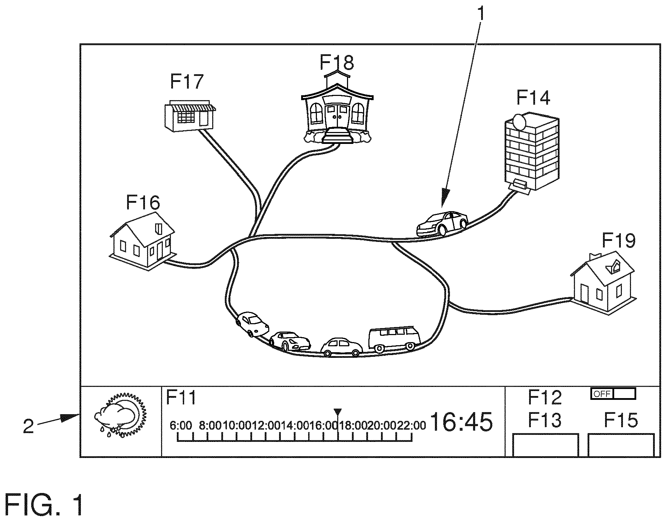

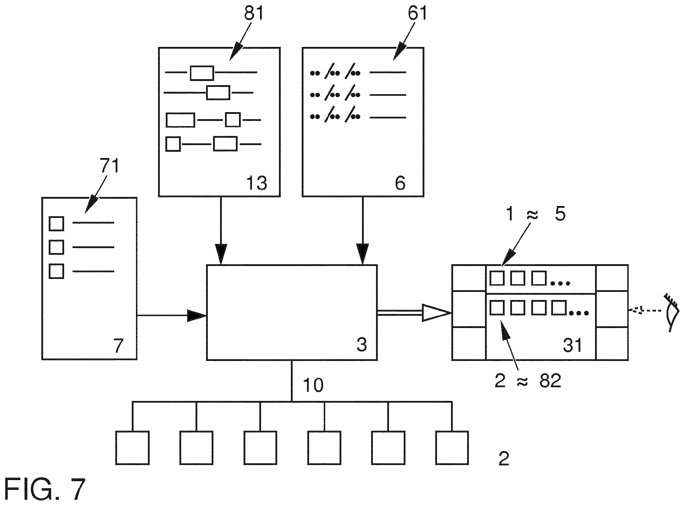

As shown in Figures 1, 2, 3, 4 and 7, the text message 8 generation method for an electronic device 3 in a vehicle 1 includes the following steps:
(i) collecting data 10 on at least one parameter of the vehicle 1 and/or the context 2 thereof,
(ii) determining at least one probable addressee 5 for the at least one text message 8, from a plurality of contacts 71 stored in an address book 7 of the electronic device 3, as a function of information 61 accumulated in a database 6 of the electronic device 3 and of the collected data 10 on the at least one parameter of the vehicle 1 and/or the context 2 thereof,
(iii) determining at least one probable text template 82 for the at least one text message 8 from a plurality of text templates 81 stored in a memory 13 of the electronic device 3, as a function of the information 61 accumulated in the database 6 of the electronic device 3, of the collected data 10 on the at least one parameter of the vehicle 1 and/or the context 2 thereof, and of the probable addressee 5 determined,
(iv) presenting in a graphical display device 31 a plurality of icons 91 representing at least one probable addressee 5 determined, and
(v) presenting in a graphical display device 31 the at least one probable text template 82 determined.

In another alternative embodiment, the plurality of contacts 71 is stored in a server that can be accessed by the electronic device 3.

Also alternatively, one of the plurality of icons 91 representing the at least one probable addressee 5 determined may represent a group of probable addressees.

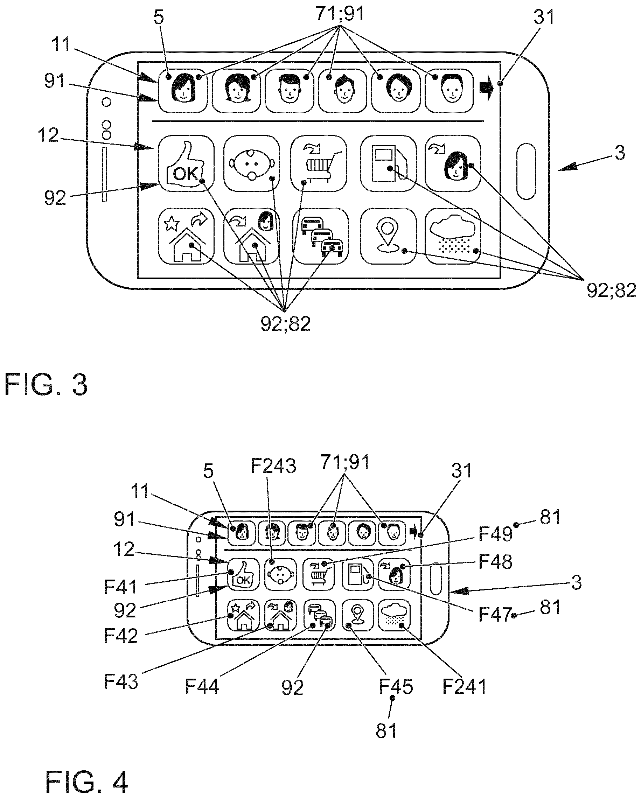

More specifically and as shown in Figures 3 and 4, the step of presenting in a graphical display device 31 the at least one probable text template 82 includes a representation of the at least one probable text template 82 using at least one symbol 92.

The data 10 on the at least one parameter of the vehicle 1 and/or context 2 thereof includes information relating to the state of the vehicle obtained using sensor means belonging to the vehicle, as well as other information on the environment and/or context obtained from the electronic device 3 itself (such as the day of the week, time of day, etc.) or other methods or channels such as satellite (GPS positioning, traffic conditions, etc.). Furthermore, information may be obtained from the user using other portable electronic devices, for example heart rate, stress level, etc.

According to a preferred embodiment of the invention and as shown in Figures 3, 4 and 5, the step of presenting in a graphical display device 31 the plurality of icons 91 includes arranging the plurality of icons 91 in descending order of probability depending on the information 61 accumulated and the collected data 10.

Additionally and as shown in Figures 3, 4 and 5, the step of presenting in a graphical display device 31 the at least one symbol 92 includes arranging the at least one symbol 92 in descending order of probability depending on the information 61 accumulated, the collected data 10 and the probable addressee 5 determined.

On the other hand and as shown in Figure 3, the text message 8 generation method for an electronic device in a vehicle includes an additional step in which a user selects one of a plurality of icons 91 representing the at least one probable addressee 5 determined.

More specifically and as shown in Figure 3, the selection by a user of one of the plurality of icons 91 determines the order of the at least one symbol 92 displayed.

Advantageously and in order to obtain a reliable estimate, the text message 8 generation method adapts the order of the text templates 81 proposed as a function of the addressee 5 selected by the user, thereby creating a correlation between the icon 91 selected and the symbols 92 proposed as probable.

According to another aspect of the invention and as shown in Figure 4, the text message 8 generation method for an electronic device in a vehicle includes an additional step in which a user selects one of the at least one symbol 92 representing the at least one probable text template 82 determined.

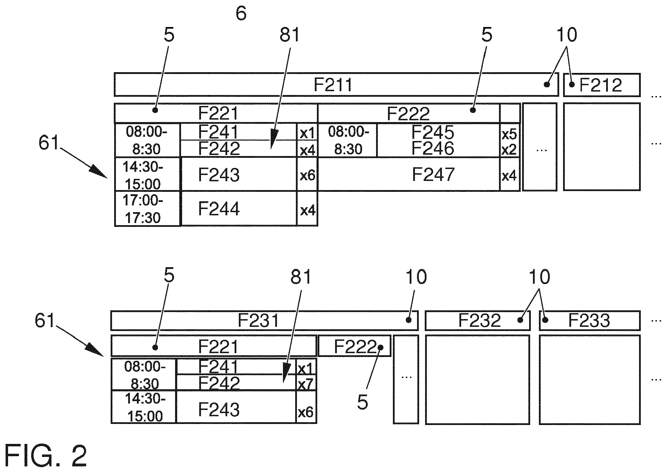

It should be noted that, as shown in Figure 2, the information 61 accumulated includes a plurality of text templates 81 previously sent and/or a plurality of addressees 5 of text messages 8 previously sent, and/or data 10 previously collected.

More specifically and as shown in Figure 1, the collected data 10 include at least one datum on the weather conditions and/or time of day and/or day of the week and/or traffic conditions and/or starting point of the route and/or destination of the route.

Alternatively, the collected data 10 may also include physiological information relating to the driver/user (such as heart rate, blinking frequency, etc.), information on the state of the vehicle 1 (such as tyre pressure, fuel level, etc.), information stored in a calendar accessible to the electronic device 3, and information received by satellite and processed in the electronic device 3 (such as news, alerts, etc.).

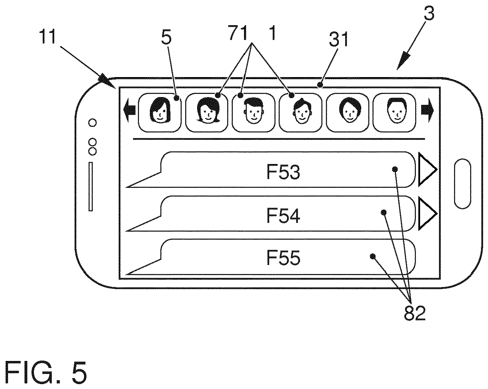

According to a preferred embodiment of the invention and as shown in Figures 4 and 5, the text message 8 includes the at least one probable text template 82 and/or at least some collected data 10 on at least one parameter of the vehicle 1 and/or on the context 2 thereof. According to another aspect of the invention, the text message 8 generation method for an electronic device in a vehicle includes an additional step in which a user edits at least one of the text templates 81 stored in the memory 13.

Preferably and as shown in Figures 3, 4 and 5, the icon of the plurality of icons 91 representing the most probable addressee 5 is displayed on the graphical display device 31 in a position closest to a driving position.

According to another preferred embodiment of the invention and as shown in Figures 3 and 4, the symbol 92 representing the text template 81 of the most probable text message 8 is displayed on the graphical display device 31 in a position closest to the driving position and/or in a position closest to the position of the icon 91.

Advantageously, the icons 91 and symbols 92 deemed most probable are in the positions closest to the driving position, facilitating the selection of same by the user.

More specifically and as shown in Figures 3 and 4, the plurality of icons 91 are shown in a first row 11 on the graphical display device 31, and the at least one symbol 92 is shown on at least one second row 12 beneath the first row 11 on the graphical display device 31.

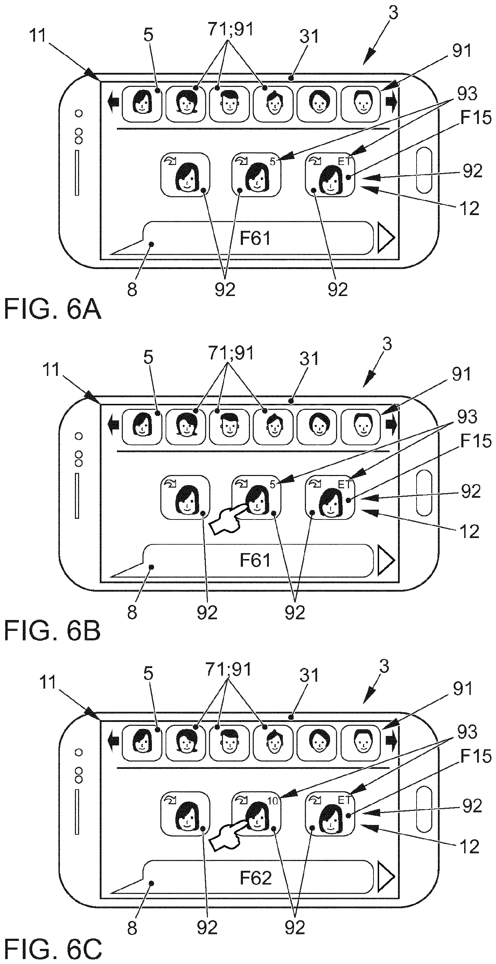

According to another aspect of the invention and as shown in Figures 6A, 6B and 6C, a suggested method shows, on the graphical display device 31, the icons 91 showing the probable addressees 5 on a first row 11 and the symbols 92 representing the probable text templates 81 on a second row 12, where the symbols 92 proposed are substantially identical to one another, and the user can distinguish between same by means of a graphical detail 93 in the representation of same. Said symbols 92 are substantially identical because they represent the same text template 81, said represented text template 81 having at least one blank space to be filled out with information. Depending on the source or origin of the information used to fill out the blank space in the text template 81, the text template 81 will be represented with one symbol 92 or another symbol that are substantially identical but that can be identified by the user by means of a graphical detail 93 distinguishing same visibly.

More specifically and as shown in Figures 6A and 6B, three symbols 92 are proposed, the content of which is substantially identical, but there is a graphical detail 93 that makes same visibly different for the user, where the symbol 92 proposed represents for example a text template 81 reading "I will pick you up ...". According to Figures 6A and 6B, the first symbol 92 represents the text template 81 without the blank space being filled in, reading simply "I will pick you up". The second symbol 92 proposed represents the text template 81 with the blank space filled out with the time indicated in the graphical detail 93 differentiating this second symbol 92 from the other symbols 92 represented, the text template then reading for example "I will pick you up in 5 minutes". The third symbol 92 proposed represents the text template 81 with the blank space filled out with the time that the navigator of the electronic device 3 or of the vehicle 1 estimates for arrival at the destination in question (ETA).

More specifically and as shown in Figures 6B and 6C, according to one advantageous option, when a user selects the second of the three symbols 92 represented before sending a text message 8 the method increases the number shown on the graphical detail 93 on the second symbol 92 such that the text template incorporates this new figure, filling out the blank space with this new figure, the wording then being "I will pick you up in 10 minutes".

Furthermore and according to the additional nonlimiting embodiments, the text messages 8 may be SMS, MMS, email or Whatsapp messages.

In an alternative embodiment, the text messages 8 are sent by double-tapping the corresponding symbol 92.

In another alternative embodiment, the text messages 8 are sent by tapping an arrow shown on the graphical display device 31.

In yet another alternative embodiment, the screen displays at least one symbol representing an alternative method to the method proposed with reference to the content of the text message 8, for example a blank message to be written or dictated.

Alternatively, the screen shows at least one icon representing an alternative method for accessing a display of all of the contacts 71 in the address book 7 of the electronic device 3.

The details, forms, dimensions and other additional elements, as well as the components used to implement the text message 8 generation method for an electronic device 3 in a vehicle 1 may be replaced using other such appropriate elements that are technically equivalent, without thereby departing essentially from the invention or the scope defined by the claims included after the list below.

### List of reference signs:

- 1: Vehicle
- 2: Context
- 3: Electronic device
- 31: Graphical display device
- 5: Addressee
- 6: Database
- 61: Information
- 7: Address book
- 71: Contacts
- 8: Text message
- 81: Text template
- 82: Probable text template
- 91: Icons
- 92: Symbol
- 93: Graphical detail
- 10: Data
- 11: First row
- 12: Second row
- 13: Memory

### List of reference signs used as abbreviations of text in the figures

- F11: Time
- F12: Navigation
- F13: Destination
- F15: Estimated time of arrival (ETA)
- F14: Office
- F16: Home
- F17: Gym
- F18: School
- F19: Tom's house
- F211: Monday
- F212: Tuesday
- F221: Ana
- F222: Tom
- F231: Near home
- F232: Near to the office
- F233: Near to the gym
- F241: It is raining
- F242: Have a nice day
- F243: Can you pick up the kids, please?
- F244: I will be home in ... minutes
- F245: I will be there
- F246: I have just left ...
- F247: I will be there
- F41: Everything is okay
- F42: I have just left home
- F43: On my way to your house
- F44: I am stuck in a traffic jam
- F45: I am close to ...
- F46: I am coming from the petrol station
- F47: I am going to the petrol station
- F48: I am on my way
- F49: I am going to the supermarket
- F51: Location
- F52: Car data
- F61: I will be there in 5 minutes
- F62: I will be there in 10 minutes

## Claims

1. Text message (8) generation method for an electronic device (3) in a vehicle (1), including the following steps:
(i) collecting data (10) of at least one parameter of the vehicle (1) and/or the context (2) thereof,
(ii) determining at least one probable addressee (5) for the at least one text message (8), from a plurality of contacts (71) stored in an address book (7) of the electronic device (3), as a function of information (61) accumulated in a database (6) of the electronic device (3) and of the data (10) collected of the at least one parameter of the vehicle (1) and/or the context (2) thereof,
(iii) determining at least one probable text template (82) for the at least one text message (8) from a plurality of text templates (81) stored in a memory (13) of the electronic device (3), as a function of the information (61) accumulated in the database (6) of the electronic device (3), of the data (10) collected of the at least one parameter of the vehicle (1) and/or the context (2) thereof, and of the probable addressee (5) determined,
(iv) presenting in a graphical display device (31) a plurality of icons (91) representing the at least one probable addressee (5) determined, wherein the step of presenting in a graphical display device (31) the plurality of icons (91) includes arranging the plurality of icons (91) in descending order of usage prediction depending on the information (61) accumulated and the collected data (10), and
(v) presenting in a graphical display device (31) the at least one probable text template (82) determined, **characterized in that** presenting in a graphical display device (31) the at least one probable text template (82) includes a representation of the at least one probable text template (82) using at least one symbol (92), and wherein presenting in a graphical display device (31) the at least one symbol (92) includes arranging the at least one symbol (92) in descending order of usage prediction depending on the information (61) accumulated, the collected data (10) and the probable addressee (5) determined.

2. Text message (8) generation method for a text message (8) for an electronic device (3) in a vehicle (1) according to Claim 1, **characterized in that** it includes an additional step in which a user selects one of a plurality of icons (91) representing the at least one probable addressee (5) determined.

3. Text message (8) generation method for a text message (8) for an electronic device (3) in a vehicle (1) according to Claim 1, **characterized in that** the selection by a user of one of the plurality of icons (91) determines the order of the at least one symbol (92) displayed.

4. Text message (8) generation method for a text message (8) for an electronic device (3) in a vehicle (1) according to Claim 1, **characterized in that** it includes an additional step in which a user selects one of the at least one symbol (92) representing the at least one probable text template (82) determined.

5. Text message (8) generation method for a text message (8) for an electronic device (3) in a vehicle (1) according to Claim 1, **characterized in that** the information (61) accumulated includes a plurality of text templates (81) previously sent and/or a plurality of addressees (5) of text messages (8) previously sent, and/or previously collected data (10) .

6. Text message (8) generation method for a text message (8) for an electronic device (3) in a vehicle (1) according to Claim 1, **characterized in that** the collected data (10) include at least one datum on the weather conditions and/or time of day and/or day of the week and/or traffic conditions and/or starting point of the route and/or destination of the route.

7. Text message (8) generation method for a text message (8) for an electronic device (3) in a vehicle (1) according to Claim 1, **characterized in that** the text message (8) includes the at least one probable text template (82) and/or at least some collected data (10) on the at least one parameter of the vehicle (1) and/or on the context (2) thereof.

8. Text message (8) generation method for a text message (8) for an electronic device (3) in a vehicle (1) according to Claim 1, **characterized in that** it includes an additional step in which a user edits at least one of the text templates (81) stored in the memory (13).

9. Text message (8) generation method for a text message (8) for an electronic device (3) in a vehicle (1) according to Claim 1, **characterized in that** the icon of the plurality of icons (91) representing the most probable addressee (5) is displayed on the graphical display device (31) in a position closest to a driving position.

10. Text message (8) generation method for a text message (8) for an electronic device (3) in a vehicle (1) according to Claim 1, **characterized in that** the symbol (92) representing the text template (81) of the most probable text message (8) is displayed on the graphical display device (31) in a position closest to the driving position and/or in a position closest to the position of the icon (91).

11. Text message (8) generation method for a text message (8) for an electronic device (3) in a vehicle (1) according to claim 1, **characterized in that** the plurality of icons (91) is shown in a first row (11) on the graphical display device (31), and in which the at least one symbol (92) is shown on at least one second row (12) beneath the first row (11) on the graphical display device (31).

## Patentansprüche

1. Textnachrichten (8)-Erstellungsverfahren für eine elektronische Vorrichtung (3) in einem Fahrzeug (1), einschließlich der folgenden Schritte:
(i) Sammeln von Daten (10) von mindestens einem Parameter des Fahrzeugs (1) und/oder dessen Kontext (2),
(ii) Bestimmen mindestens eines wahrscheinlichen Empfänger (5) für die mindestens eine Textnachricht (8) aus einer Vielzahl von Kontakten (71), die in einem Adressbuch (7) der elektronischen Vorrichtung (3) gespeichert sind, als Funktion der in der Datenbank (6) der elektronischen Vorrichtung (3) gesammelten Informationen (61), und von Daten (10), die von mindestens einem Parameter des Fahrzeugs (1) und/oder dessen Kontext (2) gesammelt wurden,
(iii) Bestimmen mindestens einer wahrscheinlichen Textvorlage (82) für die mindestens eine Textnachricht (8) aus einer Vielzahl von Textvorlagen (81), die in einem Speicher (13) der elektronischen Vorrichtung (3) gespeichert sind, als Funktion der in der Datenbank (6) der elektronischen Vorrichtung (3) gesammelten Informationen (61), der gesammelten Daten (10) des mindestens einen Parameters des Fahrzeugs (1) und/oder des Kontextes (2) davon; und des wahrscheinlichen bestimmten Empfänger (5),
(iv) Präsentieren in einer grafischen Anzeigevorrichtung (31) eine Vielzahl von Symbolen (91), die den mindestens einen wahrscheinlichen bestimmten Empfänger (5) darstellen, wobei der Schritt des Präsentierens in einer grafischen Anzeigevorrichtung (31) die Vielzahl von Symbolen (91) das Anordnen der Vielzahl von Symbolen (91) in absteigender Reihenfolge der Verwendungsvorhersage in Abhängigkeit von den gesammelten Informationen (61) und den gesammelten Daten (10) umfasst, und
(v) Präsentieren in einer grafischen Anzeigevorrichtung (31) die mindestens eine wahrscheinliche bestimmte Textvorlage (82), **dadurch gekennzeichnet, dass**
das Präsentieren in einer grafischen Anzeigevorrichtung (31) die mindestens eine wahrscheinliche Textvorlage (82) eine Darstellung der mindestens einen wahrscheinlichen Textvorlage (82) unter Verwendung mindestens eines Symbols (92) umfasst, und wobei das Präsentieren in einer grafischen Anzeigevorrichtung (31) das mindestens eine Symbol (92) das Anordnen des mindestens einen Symbols (92) in absteigender Reihenfolge der Verwendungsvorhersage in Abhängigkeit von der gesammelten Information (61), den gesammelten Daten (10) und dem wahrscheinlichen bestimmten Empfänger (5) umfasst.

2. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** es einen zusätzlichen Schritt enthält, in dem ein Benutzer einen von a Vielzahl von Symbolen (91) auswählt, die den mindestens einen wahrscheinlichen bestimmten Empfänger (5) darstellen.

3. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** die Auswahl eines der mehreren Symbole (91) durch einen Benutzer die Reihenfolge des mindestens einen angezeigten Symbols (92) bestimmt.

4. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** es einen zusätzlichen Schritt enthält, in dem ein Benutzer eines der mindestens einen Symbole (92) auswählt, die die mindestens eine wahrscheinliche bestimmte Textvorlage (82) darstellen.

5. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** die gesammelten Informationen (61) eine Vielzahl von zuvor gesendeten Textvorlagen (81), und/oder eine Vielzahl von Empfänger (5) von zuvor gesendeten Textnachrichten (8) und/oder zuvor gesammelten Daten (10) umfasst.

6. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** die gesammelten Daten (10) mindestens ein Datum auf den Wetterbedingungen und/oder der Tageszeit und/oder dem Wochentag und/oder den Verkehrsbedingungen und/oder dem Startpunkt der Route und/oder dem Ziel der Route enthalten.

7. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** die Textnachricht (8) die mindestens eine wahrscheinliche Textvorlage (82) und/oder mindestens einige gesammelte Daten (10) zu dem mindestens einen Parameter des Fahrzeugs (1) und/oder zu dessen Kontext (2) enthält.

8. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** es einen zusätzlichen Schritt enthält, in dem ein Benutzer mindestens eine der im Speicher (13) gespeicherten Textvorlagen (81) bearbeitet.

9. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** das Symbol der Vielzahl von Symbolen (91), die den wahrscheinlichsten Empfänger (5) darstellen, auf der grafischen Anzeigevorrichtung (31) an einer Position angezeigt wird, die einer Fahrposition am nächsten liegt.

10. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** das Symbol (92), das die Textvorlage (81) der wahrscheinlichsten Textnachricht (8) darstellt, auf der grafischen Anzeigevorrichtung (31) an einer Position angezeigt wird, die der Fahrposition am nächsten liegt und/oder an einer Position, die der Position des Symbols (91) am nächsten liegt.

11. Textnachrichten (8)-Erstellungsverfahren für eine Textnachricht (8) für eine elektronische Vorrichtung (3) in einem Fahrzeug (1) nach Anspruch 1, **dadurch gekennzeichnet, dass** die Vielzahl von Symbolen (91) in einer ersten Reihe (11) auf der grafischen Anzeigevorrichtung (31) gezeigt ist, und in der das mindestens eine Symbol (92) in mindestens einer zweiten Reihe (12) unter der ersten Reihe (11) auf der grafischen Anzeigevorrichtung (31) gezeigt ist.

## Revendications

1. Procédé de génération de messages textes (8) pour un dispositif électronique (3) dans un véhicule (1), comprenant les étapes suivantes:
(i) collecter des données (10) d'au moins un paramètre du véhicule (1) et/ou de son contexte (2),
(ii) déterminer au moins un destinataire probable (5) pour l'au moins un message texte (8), à partir d'une pluralité de contacts (71) stockés dans un carnet d'adresses (7) du dispositif électronique (3), comme une fonction d'informations (61) accumulées dans une base de données (6) du dispositif électronique (3) et de données (10) collectées de l'au moins un paramètre du véhicule (1) et/ou du son contexte (2),
(iii) déterminer au moins un modèle de texte probable (82) pour l'au moins un message texte (8) à partir d'une pluralité de modèles de texte (81) stockés dans une mémoire (13) du dispositif électronique (3), comme une fonction des informations (61) accumulées dans la base de données (6) du dispositif électronique (3), des données (10) collectées de l'au moins un paramètre du véhicule (1) et/ou du son contexte (2), et du destinataire probable (5) déterminé,
(iv) présenter dans un dispositif d'affichage graphique (31) une pluralité d'icônes (91) représentant l'au moins un destinataire probable (5) déterminé, où l'étape de présentation dans un dispositif d'affichage graphique (31) de la pluralité d'icônes (91) comprend la disposition de la pluralité d'icônes (91) dans l'ordre décroissant de la prédiction d'utilisation en fonction des informations (61) accumulées et des données collectées (10), et
(v) présenter dans un dispositif d'affichage graphique (31) l'au moins un modèle de texte probable (82) déterminé, **caractérisé en ce que**
la présentation dans un dispositif d'affichage graphique (31) de l'au moins un modèle de texte probable (82) comprend une représentation de l'au moins un modèle de texte probable (82) en utilisant au moins un symbole (92), et où la présentation dans un dispositif d'affichage graphique (31) de l'au moins un symbole (92) comprend la disposition de l'au moins un symbole (92) dans l'ordre décroissant de la prédiction d'utilisation en fonction des informations (61) accumulées, des données collectées (10) et du destinataire probable (5) déterminé.

2. Procédé de génération de messages textes (8) pour un message texte (8) pour un dispositif électronique (3) dans un véhicule (1) selon la revendication 1, **caractérisé en ce qu'**il comprend une étape supplémentaire dans laquelle un utilisateur sélectionne l'une parmi une pluralité d'icônes (91) représentant l'au moins un destinataire probable (5) déterminé.

3. Procédé de génération de messages textes (8) pour un message texte (8) pour un dispositif électronique (3) dans un véhicule (1) selon la revendication 1, **caractérisé en ce que** la sélection par un utilisateur de l'une parmi la pluralité d'icônes (91) détermine l'ordre de l'au moins un symbole (92) affiché.

4. Procédé de génération de messages textes (8) pour un message texte (8) pour un dispositif électronique (3) dans un véhicule (1) selon la revendication 1, **caractérisé en ce qu'**il comprend une étape supplémentaire dans laquelle un utilisateur sélectionne l'un de l'au moins un symbole (92) représentant l'au moins un modèle de texte probable (82) déterminé.

5. Procédé de génération de messages textes (8) pour un message texte (8) pour un dispositif électronique (3) dans un véhicule (1) selon la revendication 1, **caractérisé en ce que** les informations (61) accumulées comprennent une pluralité de modèles de texte (81) précédemment envoyés et/ou une pluralité de destinataires (5) de messages textes (8) précédemment envoyés, et/ou des données précédemment collectées (10) .

6. Procédé de génération de messages textes (8) pour un message texte (8) pour un dispositif électronique (3) dans un véhicule (1) selon la revendication 1, **caractérisé en ce que** les données collectées (10) comprennent au moins une donnée sur les conditions météorologiques et/ou l'heure de la journée et/ou le jour de la semaine et/ou les conditions de trafic et/ou le point de départ de l'itinéraire et/ou la destination de l'itinéraire.

7. Procédé de génération de messages textes (8) pour un message texte (8) pour un dispositif électronique (3) dans un véhicule (1) selon la revendication 1, **caractérisé en ce que** le message texte (8) comprend l'au moins un modèle de texte probable (82) et/ou au moins certaines données collectées (10) sur l'au moins un paramètre du véhicule (1) et/ou sur le son contexte (2) .

8. Procédé de génération de messages textes (8) pour un message texte (8) pour un dispositif électronique (3) dans un véhicule (1) selon la revendication 1, **caractérisé en ce qu'**il comprend une étape supplémentaire dans laquelle un utilisateur édite au moins un des modèles de texte (81) stockés dans la mémoire (13).

9. Procédé de génération de messages textes (8) pour un message texte (8) pour un dispositif électronique (3) dans un véhicule (1) selon la revendication 1, **caractérisé en ce que** l'icône parmi la pluralité d'icônes (91) représentant le destinataire le plus probable (5) est affichée sur le dispositif d'affichage graphique (31) dans une position la plus proche d'une position de conduite.

10. Procédé de génération de messages textes (8) pour un message texte (8) pour un dispositif électronique (3) dans un véhicule (1) selon la revendication 1, **caractérisé en ce que** le symbole (92) représentant le modèle de texte (81) du message texte le plus probable (8) est affiché sur le dispositif d'affichage graphique (31) dans une position la plus proche de la position de conduite et/ou dans une position la plus proche de la position de l'icône (91).

11. Procédé de génération de messages textes (8) pour un message texte (8) pour un dispositif électronique (3) dans un véhicule (1) selon la revendication 1, **caractérisé en ce que** la pluralité d'icônes (91) est affichée dans une première rangée (11) sur le dispositif d'affichage graphique (31), et où l'au moins un symbole (92) est affiché sur au moins une deuxième rangée (12) sous la première rangée (11) sur le dispositif d'affichage graphique (31).
